(19) Europäisches Patentamt
European Patent Office
Office européen des brevets

(11) **EP 4 641 314 A2**

(12) **EUROPEAN PATENT APPLICATION**

(43) Date of publication:
**29.10.2025 Bulletin 2025/44**

(21) Application number: **25171869.8**

(22) Date of filing: **23.04.2025**

(51) International Patent Classification (IPC):
**G03G 15/20** (2006.01)

(52) Cooperative Patent Classification (CPC):
**G03G 15/2039**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.04.2024 JP 2024072931**

(71) Applicant: **CANON KABUSHIKI KAISHA Tokyo 146-8501 (JP)**

(72) Inventor: **MIYAMOTO, Akitomo Tokyo, 146-8501 (JP)**

(74) Representative: **TBK Bavariaring 4-6 80336 München (DE)**

(54) **IMAGE FORMING APPARATUS FOR OBTAINING POWER CONSUMPTION VALUE**

(57)   An image forming apparatus (100) comprises plurality of function modules (401; 402; 403; 404; 405; 406) including a first function module configured to fix a toner image to a sheet a second function module used for forming the toner image on the sheet. The apparatus acquires a power consumption value of the first function module and a power consumption value of the second function module, respectively, acquires an accumulated power consumption amount of the first function module by accumulating power consumption values of the first function module in a time axis direction, and acquires an accumulated power consumption amount of the second function module by accumulating power consumption values of the second function module in the time axis direction.

**F I G. 3**

**Description**

BACKGROUND OF THE INVENTION

Field of the Invention

The present invention relates to an image forming apparatus for acquiring a power consumption value.

Description of the Related Art

An image forming apparatus uses a plurality of loads to form images on a recording material. Examples of such loads include an image reader that reads an image from a document, a motor that conveys a recording material, a light source and a high-voltage power supply that generate a toner image on the recording material, and a heater that applies heat and pressure to fix the image on the recording material. In recent years, it has been demanded by the public to reduce $CO_2$ emissions by reducing a power consumption of an image forming apparatus. According to Japanese Patent Laid-Open No. 2010-120205, a power consumption amount of an image forming apparatus is estimated from data amount of print data for each user, and the power consumption amount is displayed on a user interface. The users can use the image forming apparatus within a pre-allocated allowable range of an electric power amount.

According to Japanese Patent Laid-Open No. 2010-120205, the personal computer (PC) estimates the power consumption based on data amount of print data and setting of monochrome print/color print. Therefore, the estimation accuracy of the power consumption amount is low. An image forming apparatus has a plurality of module, and power consumption (W) (also referred to as power consumption value) and power consumption amount (W·s) (also referred to as accumulated power consumption amount) differ for each module. Therefore, by acquiring the power consumption value for each module and accumulating the plurality of acquired power consumption values, the accumulated power consumption in the entire image forming apparatus can be accurately acquired.

SUMMARY OF THE INVENTION

The present disclosure provides an image forming apparatus as specified in claims 1 to 16.
Further features of the present invention will become apparent from the following description of exemplary embodiments (with reference to the attached drawings).

BRIEF DESCRIPTION OF THE DRAWINGS

FIG. 1 is a drawing illustrating an image forming system.
FIGS. 2A and 2B are diagrams illustrating a fixing device.
FIG. 3 is a drawing illustrating a user interface.
FIG. 4 is a drawing illustrating a method for acquiring an accumulated power consumption amount by each function module.
FIG. 5 is a drawing illustrating a method for acquiring an accumulated power consumption amount by each function module.
FIG. 6 is a drawing illustrating a method for accumulating power consumption values.
FIG. 7 is a drawing illustrating a controller.
FIG. 8 is a drawing illustrating a controller.
FIG. 9 is a drawing illustrating a controller.
FIG. 10 is a drawing illustrating an example of accumulating power consumption values of a fixing device.
FIG. 11 is a drawing illustrating a method for accumulating power consumption values for function modules other than a fixing device.
FIG. 12 is a drawing illustrating a method for acquiring power consumption values for function modules other than a fixing device.
FIG. 13 is a drawing illustrating a controller.
FIG. 14 is a flowchart illustrating a control method.
FIG. 15 is a flowchart illustrating a control method.
FIG. 16 is a drawing illustrating an image forming system.

DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

1. Image forming system

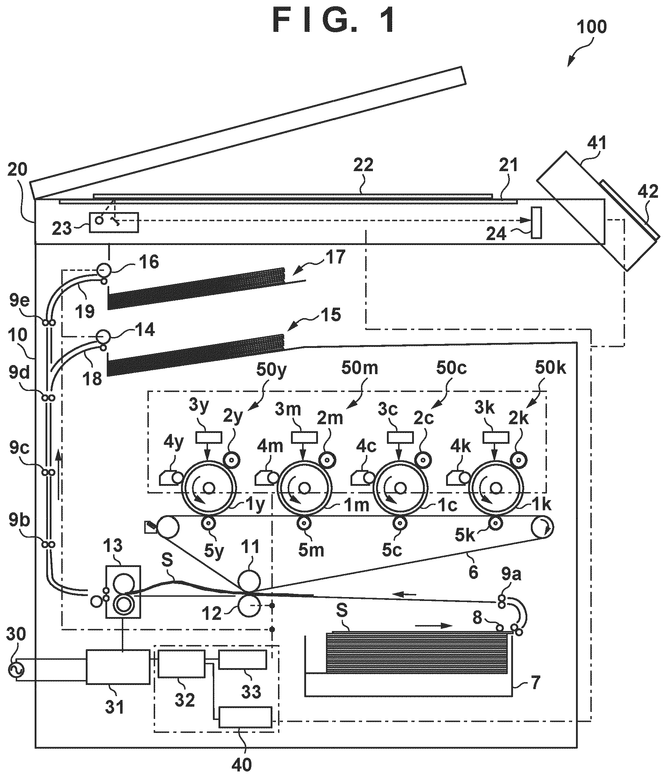

As illustrated in FIG. 1, an image forming system 100 is a copying machine or a multifunction peripheral having an image forming apparatus 10 and an image reader 20. Note that the image forming system 100 may be a printer that does not include the image reader 20. Note that the image reader 20 may be referred to as an image reading apparatus or a document reading apparatus.

1-1. Image forming apparatus

The image forming apparatus 10 may be a color printer or a monochrome printer. In the example of FIG. 1, the image forming apparatus 10 is a tandem type full color printer capable of forming full color images with an electrophotographic manner.

The image forming unit 50y, 50c, 50m, 50k forms yellow, magenta, cyan, and black toner images, respectively. In FIG. 1, the characters of ymck given at the end of the reference numeral are sometimes omitted when the matters common to the four colors are described.

The image forming unit 50 includes a photosensitive drum 1, a charging device 2, an exposure device 3, a developing device 4, and a primary transfer roller 5. The photosensitive drum 1 is a cylindrical image carrier and rotates counterclockwise.

The charging device 2 may be, for example, a corona charging device that irradiates charged particles by corona discharge, and charges the surface of the photosensitive drum 1. As a result, the surface potential becomes a dark portion potential of negative polarity or positive polarity. The charging device 2 may have a roller or a wire for discharging. A high voltage called a charging voltage or a charging bias may be applied to the charging device 2. The exposure device 3 has, for example, a light-emitting element of a semiconductor laser or an organic EL (Electroluminescence) type as a light source, and scans light on the surface of the photosensitive drum 1 in accordance with input image data. Accordingly, an electrostatic latent image is formed on the surface of the photosensitive drum 1. The developing device 4 includes a container that contains a developer including a toner and a carrier, and a developing roller that supplies the developer to the photosensitive drum 1. Accordingly, the electrostatic latent image on the surface of the photosensitive drum 1 is developed to form a toner image. A high voltage called a developing voltage or a developing bias is applied to the developing roller of the developing device 4.

An intermediate transfer belt 6 rotates while being stretched around a plurality of rollers including the opposing rollers 11. A primary transfer roller 5 is disposed at a primary transfer position so as to face the photosensitive drum 1. The primary transfer roller 5 is subjected to a primary transfer bias, which is a high-voltage, and transfers the toner image carried on the surface of the photosensitive drum 1 to the intermediate transfer belt 6. The toner images of the four color components are transferred to the intermediate transfer belt 6 in a superimposed manner (primary transfer), whereby a full-color toner image is formed. The intermediate transfer belt 6 carries the full color toner image and conveys it to a secondary transfer position. The opposing rollers 11 and a secondary transfer roller 12 are disposed at the secondary transfer position.

The cassette 7 is a stocker that accommodates a bundle of sheets. FIG. 1 illustrates an embodiment in which the image forming apparatus 10 comprises only one cassette 7. However, the image forming apparatus 10 may be provided with a plurality of cassettes 7 capable of accommodating sheets S of different types (e.g., size, thickness, or presence or absence of surface-coating). The cassette 7 may be an optional feeding device connected to the image forming apparatus 10 as an optional cassette pedestal.

A feeding roller 8 feeds the sheets S one by one from the bundle of the sheets S in the cassette 7 to a conveyance path. The conveyance roller 9a conveys the sheet S along the conveyance path and feeds the sheet to the secondary transfer position. The secondary transfer roller 12 is applied with a secondary transfer bias as a high voltage to transfer the full color toner image carried by the intermediate transfer belt 6 to the sheet S that has reached the secondary transfer position (secondary transfer).

The fixing device 13 is a fixing unit disposed downstream of the secondary transfer position. The fixing device 13 includes a fixing roller (or a cylindrical heating film) and a pressing roller, and fixes the toner image on the sheet S by heating and pressing the sheet S on which the toner image has been transferred. Conveyance rollers 9b to 9e conveys the sheet S that has passed through the fixing device 13, and discharges the sheet S to a discharge tray 15 or a discharge tray 17 designated by print job information. A discharge roller 14 discharges the sheet S delivered from the conveyance roller 9d through the conveyance path 18 to the discharge tray 15. A discharge roller 16 discharges the sheet S delivered from the conveyance roller 9e through the conveyance path 19 to the discharge tray 17.

1-2. Image reader

The image reader 20 includes a light source 23 that emits illumination light to a document 22 placed on a platen glass 21, and an image sensor 24 that receives image light from the document 22 and generates image data. Although omitted in FIG. 1, an automatic document feeder (ADF) that conveys the document 22 one by one to the image reader 20 may be employed.

1-3. Controller and power supply device

An AC control unit 31 supplies an AC supplied from an external power source 30 such as a commercial AC power source to an AC load (e.g., a heating element of the fixing device 13 and an AC/DC conversion circuit 32). AC is an abbreviation for an alternating current. DC is an abbreviation for a direct current. A DC control unit 33 supplies the direct current generated by the AC/DC conversion circuit 32 to direct current loads (e.g., the motor, the exposure device 3, the controller 40, the image reader 20, the charging device 2, the developing device 4, the primary transfer roller 5, and the secondary transfer roller 12). The AC/DC conversion circuit 32 may include a plurality of DC/DC conversion circuits for generating different DC voltages. The controller 40 controls generation of image data by the image reader 20 and formation of an image on the sheet S by the image forming apparatus 10. The operation unit 41 provides a user interface to a user of the image forming system 100. The operation unit 41 includes, for example, a touch panel 42. The touch panel 42 includes a display device that displays images and information under the control of the controller 40, and a touch sensor that accepts a touch input from a user.

1-5. Fixing device

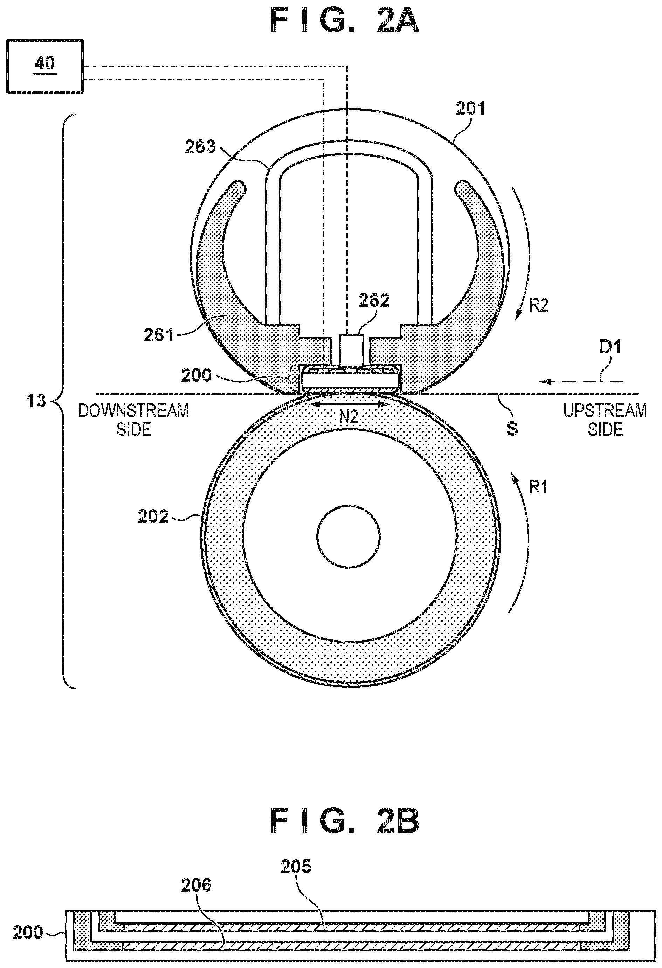

As illustrated in FIG. 2A, the fixing device 13 includes a fixing film 201, a pressing roller 202, a heater holder 261, and a pressing stay 263. The arrow D1 indicates the conveyance direction of the sheet S. The arrow R1 indicates the rotational direction of the pressing roller 202. The arrow R2 indicates the rotational direction of the fixing film 201.

The fixing film 201 is a tubular (endless) film-like member having flexibility. The pressing roller 202 includes a core metal and an elastic layer. The heater holder 261 is disposed inside the fixing film 201. The heater holder 261 functions as a holding member that holds the heater 200. The pressing stay 263 is formed of a rigid member such as metal, and applies a pressing force received from a spring or the like (not illustrated) to the pressing roller 202 via the heater holder 261. By this pressing force, a fixing nip N2 having a predetermined area is formed between the fixing film 201 and the pressing roller 202.

The heater 200 is a plate-shaped heating member that rapidly heats the fixing film 201 while contacting the inner peripheral surface of the fixing film 201. The heater 200 is, for example, a ceramic heater. As a modification, instead of the heater 200, a pressure plate having no heating function may constitute the fixing nip N2. In this case, a halogen heater or the like is disposed in the fixing film 201 at a position away from the inner peripheral surface of the fixing film 201 or in the pressing roller 202. A thermistor 262 is attached to the heater 200. The thermistor 262 is a temperature detection element (temperature sensor) that detects a temperature of the heater 200.

The controller 40 adjusts an electric power supplied from the external power source 30 to the heater 200 by a semiconductor switching element (e.g., a triac), thereby bringing the temperature detected by the thermistor 262 close to a target temperature. When the fixing film 201 is driven to rotate by the pressing roller 202 and the temperature of the heater 200 reaches a predetermined target temperature, the sheet S to which the toner image has been transferred is conveyed to the fixing nip N2. When the sheet S passes through the fixing nip N2, heat of the heater 200 is applied to the sheet S via the fixing film 201. That is, an unfixed toner image on the sheet S is heated and pressed, and is fixed to the sheet S. The sheet S that has passed through the fixing nip N2 is separated from the fixing film 201 and further conveyed.

As illustrated in FIG. 2B, the heater 200 may include a heating element 205 and a heating element 206. When the sheet S is a plain paper (low basis weight), the heating element 205 may be turned on and the heating element 206 may be turned off. When the sheet S is a thick paper (high basis weight), both of the heating element 205 and the heating element 206 may be turned on. As described above, the controller 40 may switch the amount of heat supplied from the heater 200 to the sheet S in accordance with the basis weight of the sheet S.

2. Display of accumulated power consumption amount

The accumulated power consumption amount WA (W·s) of the image forming system 100 varies depending on how the image forming system 100 is used. Therefore, by showing the accumulated power consumption amount WA to the user, the user will be able to ascertain the accumulated power consumption amount WA and select a print mode with a higher power saving effect.

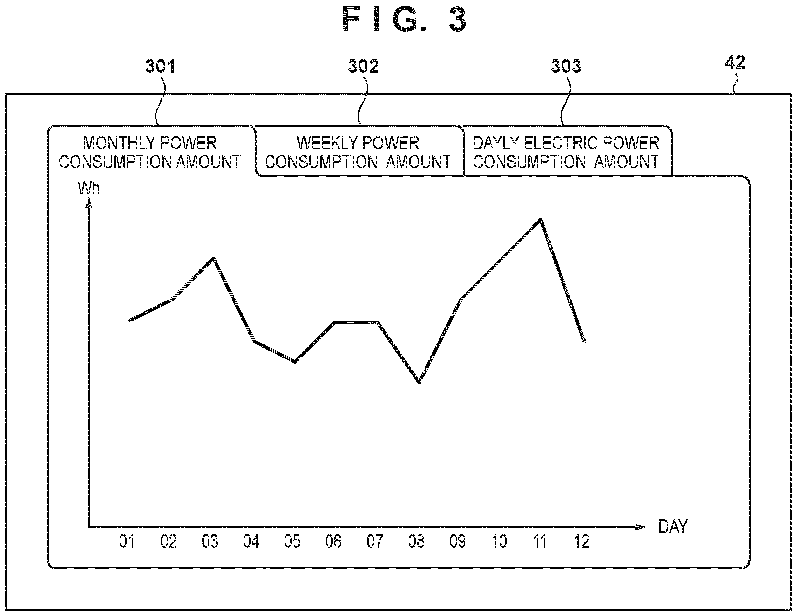

FIG. 3 illustrates an example of a user interface (UI) displayed on the touch panel 42. The controller 40 may accumulate the amount of electric power consumed in the image forming system 100 into an accumulation coverage as any period, such as every hour, every day, every week, or every month, and display the accumulated power consumption amount on the touch panel 42. In addition, the transition of the amount of electric power accumulated in any period, such as one day, one week, one month, and one year, may be displayed for all the displayed periods. A tab 301 is a UI for displaying the accumulated power consumption amount WA for one month. In a graph illustrated in the tab 301, the horizontal axis is the date. The minimum value on the horizontal axis is the first day of each month. As a modification, a date about a predetermined number of days (e.g., a date of 30 days before) from the date at the time of display may be the minimum value of the horizontal axis. The vertical axis of the graph of the tab 301 represents the accumulated power consumption amount WA for each day corresponding to each date. FIG. 3 is an example of a line graph, which may help a user understand the transition. Other types of graphs may be used, such as bar graphs. In addition, numerical values may be displayed together with the graph. Note that, the horizontal axis of the graph of the tab 301 may be switched in units of weeks, for example. In this case, the vertical axis represents the accumulated power consumption amount WA per week. Here, an example illustrated in the graph is described, but a numerical value may be displayed in a tabular format. A tab 302 is a UI for displaying the accumulated power consumption amount WA for one week. Although not illustrated, in the graph displayed by selecting the tab 302, for example, the horizontal axis represents the date, and the vertical axis represents the accumulated power consumption amount WA for each day. A tab 303 is a UI for displaying the accumulated power consumption amount WA for one day. In the graph displayed by selecting the tab 303, for example, the horizontal axis represents the time, and the vertical axis represents the accumulated power consumption amount WA for each hour. The controller 40 activates a tab selected by the user among the tabs 301 to 303. Further, the touch panel 42 may display the accumulated power consumption amount WA of the image forming system 100 acquired by starting the accumulation of the power consumption value after the image forming system 100 is installed in the room of the customer. As described above, the accumulation period may be selected by the user or may be predetermined. Note that the accumulated power consumption amount WA may be displayed separately for each module. For example, the accumulated power consumption amount WA of the fixing module 403 and the accumulated power consumption amount WA of the main body module may be displayed in separate columns or as separate graphs.

3. How to obtain an accumulated power consumption amount

3-1. Acquiring and accumulating power consumption values for each module

The image forming system 100 has a number of loads. When a power meter (power sensor) is connected to each load, the manufacturing cost of the image forming system 100 is increased. Therefore, there is a need to reduce the number of power meters. For example, there may be a method of estimating a power amount based on a current value acquired using a current detection circuit (current sensor), a method of estimating a power amount based on a voltage value acquired using a voltage detection circuit (voltage sensor), or a method of estimating a power amount without using a current detection circuit and a voltage detection circuit. In addition, there is also a need to acquire the amount of electric power accurately and efficiently.

Therefore, in the present embodiment, the image forming system 100 is classified into several function modules, and the power consumption value Pm for each function module is obtained, so that the power consumption value Pm and the accumulated power consumption amount Wm are acquired accurately and efficiently. The operation of each function module may vary depending on the state of the image forming system 100. Therefore, loads that tend to consume the same or similar power in the respective operation states may be classified into the same module. In the present embodiment, the function module may be referred to as a load group including one or a plurality of loads to be subjected to calculation of the power consumption value Pm and the accumulated power consumption amount Wm.

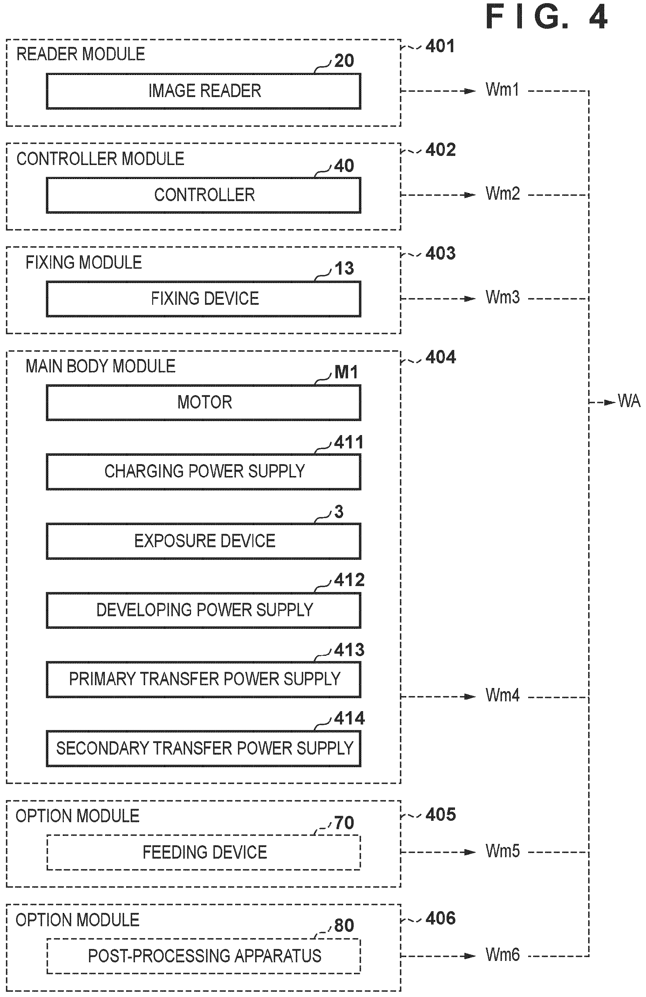

FIG. 4 is a diagram illustrating an example of a plurality of function modules. The plurality of function module may acquire the accumulated power consumption amount Wm according to different calculation methods. A reader module 401 is a function module including the image reader 20. The accumulated power consumption amount by the reader module 401 is Wm1 (W·s). The accumulated power consumption amount Wm1 of the reader module 401 is the amount of power required to read one surface of the document 22, and therefore may be treated as a fixed value for each surface. As a result, the accumulated power consumption amount Wm1 can be obtained by a simple method without using a power meter.

A controller module 402 is a function module including the controller 40 and the operation unit 41. The accumulated power consumption amount of the controller module 402 is Wm2 (W·s). The accumulated power consumption amount Wm2 of the controller module 402 may also be treated as substantially fixed value. Accordingly, the accumulated power consumption amount Wm2 can be obtained by a simple method without using a power meter.

A fixing module 403 is a function module including the fixing device 13. The accumulated power consumption amount of the fixing module 403 is Wm3 (W·s). The accumulated power consumption amount Wm3 of the fixing device 13 varies depending on the initial temperature at the time of transitioning from a standby state to a wake-up state (also referred to as a warm-up state). Therefore, the power consumption value may be accumulated for each control period of the heater 200. For example, the controller 40 determines a power value to be supplied to the heater 200 in accordance with the temperature detected by the thermistor 262, and supplies an alternating current to the heater 200 with a control value (control duty) corresponding to the power value. That is, the temperature is detected by the thermistor 262 for each control period, and the control value is determined. Therefore, the controller 40 calculates the power consumption amount for each control period. Thus, the power consumption amount of the fixing device 13 can be accurately obtained. In the following, DUTY is used as a variable indicating a control value.

The main body module 404 is comprised of a plurality of loads that mainly consume power when the image forming system 100 is in an active state. The accumulated power consumption amount of the main body module 404 is Wm4 (W·s). For example, the main body module 404 includes a motor M1, a charging power supply 411, the exposure device 3, a developing power supply 412, a primary transfer power supply 413, and a secondary transfer power supply 414. These include loads in which the power consumption value Pm and the accumulated power consumption amount Wm vary depending on the print job. The motor M1 is a driving source that rotationally drives the conveyance roller 9a to 9e, the discharge rollers 14 and 16, the photosensitive drum 1, and the like. The charging power supply 411 is a part of the AC/DC conversion circuit 32 and is a power supply device that generates the charging voltage. The developing power supply 412 is a part of the AC/DC conversion circuit 32 and is a power supply device that generates the developing voltage. The primary transfer power supply 413 is a part of the AC/DC conversion circuit 32 and is a power supply device that generates the primary transfer voltage. The secondary transfer power supply 414 is a part of the AC/DC conversion circuit 32 and is a power supply device that generates the secondary transfer voltage. The accumulated power consumption amount Wm4 of the main body module 404 may vary depending on the print job. For example, the accumulated power consumption amount Wm4 when A4 size is designated in the print job differs from the accumulated power consumption amount Wm4 when A3 size is designated in the print job. In addition, the accumulated power consumption amount Wm4 when the low process speed PS1 (m/s) is designated in the print job differs from the accumulated power consumption amount Wm4 when the high process speed PS2 (m/s) is designated in the print job. The process speed may be referred to as a conveyance speed of the sheet S. The accumulated power consumption amount Wm4 in monochrome printing differs from the accumulated power consumption amount Wm4 in full-color printing. Therefore, the accumulated power consumption amount Wm4 is required for each image formed on the sheet S.

A feeding device 70 and a post-processing apparatus 80 are respectively optional devices. When the optional device is attached to the image forming apparatus 10, the power consumption value Pm and the accumulated power consumption amount Wm of the optional device may be acquired for each module. The optional device may be part of the main body module 404. However, the optional device may be included in a module independent of the main body module 404 as follows.

The optional module 405 includes the feeding device 70 connected to a side or bottom surface of the image forming apparatus 10. The accumulated power consumption amount of the optional module 405 is Wm5 (W·s). Note that, the housing of the feeding device 70 and the housing of image forming apparatus 10 may be independent of each other.

An optional module 406 includes the post-processing apparatus 80 connected to a side surface of the image forming apparatus 10. The accumulated power consumption amount of the optional module 406 is Wm6 (W·s). Note that, the housing of the post-processing apparatus 80 and the housing of image forming apparatus 10 may be independent of each other. The post-processing apparatus 80 includes an image inspection apparatus, a sorting apparatus, a bookbinding apparatus, a stapling apparatus, a hole punching apparatus, and the like.

The maximum value of the current value (e.g., 15A, 20A, etc.) that can be supplied from one power outlet is stipulated by laws. Therefore, one power cable may be provided in the housing of the image forming apparatus 10, and another power cable may be provided in the housing of the optional device (the feeding device 70 and the post-processing apparatus 80).

The controller 40 sums the accumulated power consumption amount Wm1, Wm2, Wm3 and Wm4 to obtain the accumulated power consumption amount WA of the entire of the image forming system 100. When the optional module 405 is present, the accumulated power consumption amount Wm5 is also added to the accumulated power consumption amount WA. When the optional module 406 is present, the accumulated power consumption amount Wm6 is also added to the accumulated power consumption amount WA.

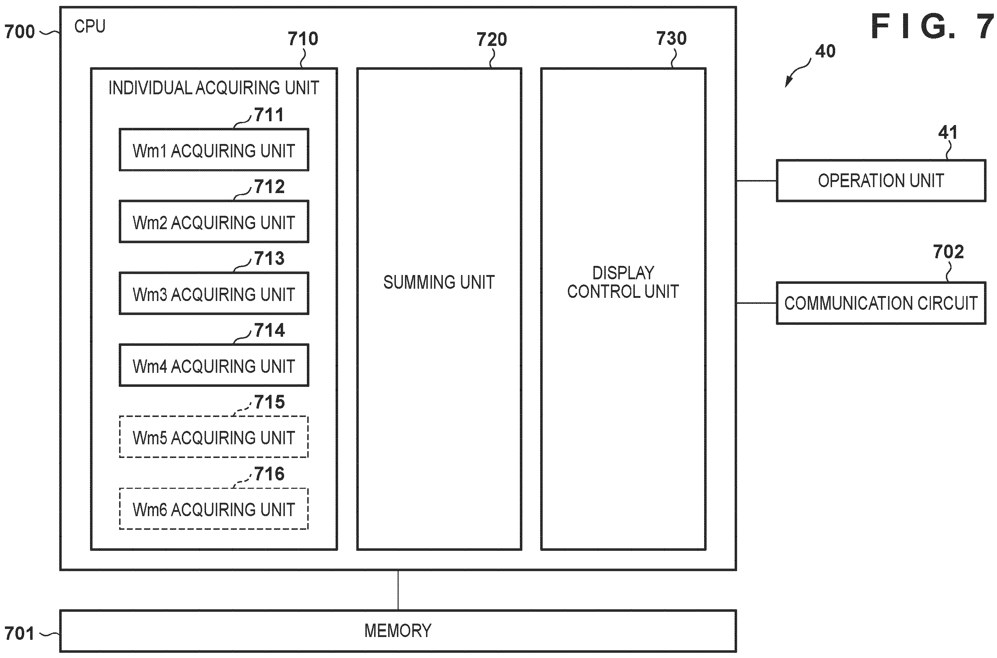

The controller 40 displays the accumulated power consumption amount WA on the touch panel 42. Note that, the controller 40 may log the accumulated power consumption amount WA daily. The controller 40 may determine the accumulated power consumption amount for each week, month, or year based on the accumulated power consumption amount for each logged daily. The logged accumulated power consumption amount WA may be stored in a ROM area (e.g., hard disk drive, solid state drive, etc.) of the memory 701 illustrated in FIG. 7.

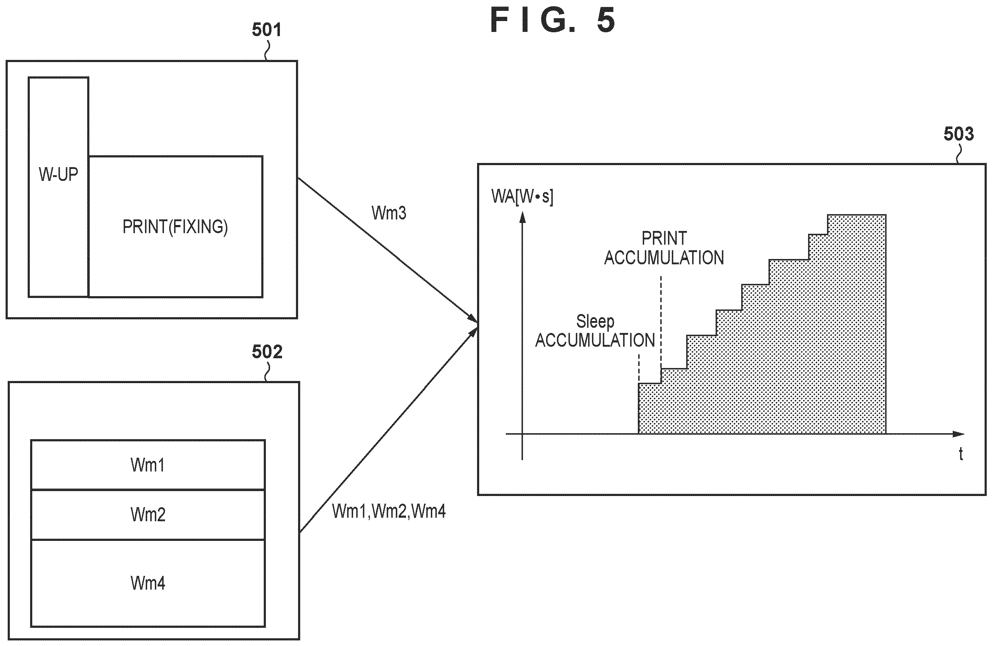

FIG. 5 illustrates a method of accumulating power consumption values. The operation states of the image forming system 100 include a sleep state, a standby state, and a print state (active state). The sleep state is a state in which reception of a print job is awaited, and is a state in which the power consumption value is the smallest. The standby state is a state in which image formation can be started as soon as a print job is received. The print state is a state in which the image forming system 100 is forming an image on the sheet S.

The frame 501 indicates a change in the power consumption value Pm of the fixing device 13. When the print job is input, the fixing device 13 performs a wake-up operation (W-UP). The wake-up operation increases a temperature of the heater 200 to the target temperature. When the temperature of the heater 200 reaches the target temperature, the fixing device 13 is brought into a fixable state (PRINT), and the toner image can be fixed on the sheet S. Note that the power consumption value (W) required for the wake-up operation is larger than the power consumption value (W) for maintaining the temperature of the heater 200 at the target temperature.

The frame 502 indicates a change in the power consumption value Pm of the main body module 404. The power consumption value Pm of the main body module 404 is determined by the print job and is substantially constant in the print state (active state).

The frame 503 indicates a change in the accumulated power consumption amount WA from the sleep state to the end of the print state. The controller 40 accumulates and sums the power consumption value Pm of all the function modules over time to obtain the accumulated power consumption amount WA. According to this embodiment, the controller 40 sums the accumulated power consumption amount Wm3 of the fixing module 403 (fixing device 13) to the accumulated power consumption amount WA for each control period of the fixing device 13. Since the accumulated power consumption amount Wm3 is added to the accumulated power consumption amount WA for each control period of the fixing device 13, the accumulated power consumption amount WA is increased stepwise at each control period. The controller 40 may add the accumulated power consumption amount Wm1, Wm2, Wm4 of the reader module 401, the controller module 402, and the main body module 404 to the accumulated power consumption amount WA for each image.

In the frame 503, Sleep accumulation indicates a timing at which the accumulated power consumption amount in the sleep state is added to the accumulated power consumption amount WA. PRINT accumulation indicates the starting timing of the accumulation of the power consumption value Pm in the print state.

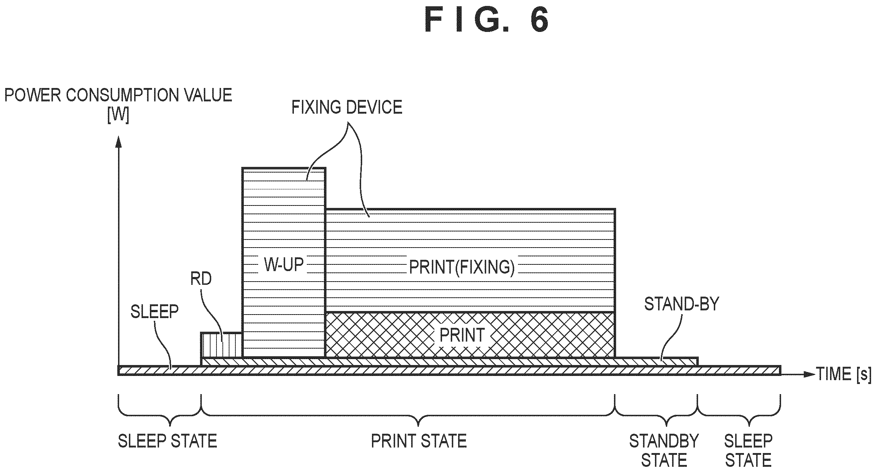

FIG. 6 illustrates power consumption value Pm (W) of the respective module for each operation state of the image forming system 100. The power consumption values Pm and the accumulated power consumption amount Wm in the sleep state (SLEEP) are very small. However, loads operating in the sleep state (e.g., communication circuits, etc.) are also operating in the print state and the standby state. When the image forming system 100 enters a copy job, the image forming system 100 transitions from a sleep state to a print state. The image reader 20 reads the document 22. The power consumption value Pm and the accumulated power consumption amount Wm during the reading of the document 22 are indicated as RD. Note that a load (e.g., the operation unit 41 or the like) operating in the standby state operates even in the print state. The power consumption value Pm and the accumulated power consumption amount Wm of such loads are indicated as STAND-BY When the reading of the document 22 is completed, wake-up of the fixing device 13 is executed. The power consumption value Pm and the accumulated power consumption amount Wm at this time are indicated as W-UP. When the wake-up of the fixing device 13 is completed, image formation on the sheet S is performed. PRINT illustrates the power consumption by the main body module 404. PRINT (fixing) indicates the power consumption value Pm and the accumulated power consumption amount Wm consumed by the fixing device 13. Upon completion of the copy job, the image forming system 100 transitions from the print state to the standby state. Further, in the standby state, the image forming system 100 transitions from the standby state to the sleep state when the length (time) of the period during which the subsequent job is not input exceeds the threshold value.

The controller 40 accumulates (or integrates) the power consumption value Pm of the respective function modules along the time axis direction to obtain and sum the accumulated power consumption amount Wm of the respective function modules, thereby obtaining the accumulated power consumption amount WA. The above accumulation is very similar, or in some cases equivalent, to mathematical integration of the power consumption value Pm with respect to time (or over time). That is, the sum of the areas of the plurality of square waves illustrated in FIG. 6 indicates the accumulated power consumption amount WA(W·s).

3-2. Controller

FIG. 7 illustrates hardware constituting the controller 40. The CPU 700 implements various functions by executing a control program stored in a nonvolatile area of the memory 701. The memory 701 is a storage device including at least a read-only memory (ROM) and a random access memory (RAM). The memory 701 may be a storage device including a hard disk drive (HDD) and a solid state drive (SSD).

The individual acquiring unit 710 acquires the power consumption amount for each of the plurality of function module. Wm1 acquiring unit 711 acquires the accumulated power consumption amount Wm1 by acquiring the power consumption value Pm1 of the reader module 401 and accumulating the acquired power consumption value Pm1. Wm2 acquiring unit 712 acquires the accumulated power consumption amount Wm2 by acquiring the power consumption value Pm2 of the controller module 402 and accumulating the acquired power consumption value Pm2. Wm3 acquiring unit 713 acquires the accumulated power consumption amount Wm3 by acquiring the power consumption value Pm3 of the fixing module 403 and accumulating the acquired power consumption value Pm3. Wm4 acquiring unit 714 acquires the accumulated power consumption amount Wm4 by acquiring the power consumption value Pm4 of the main body module 404 and accumulating the acquired power consumption value Pm4. When the optional module 405 is present, Wm5 acquiring unit 715 acquires the accumulated power consumption amount Wm5 by acquiring the power consumption value Pm5 of the optional module 405 and accumulating the acquired power consumption value Pm5. When the optional module 406 is present, Wm6 acquiring unit 716 acquires the accumulated power consumption amount Wm6 by acquiring the power consumption value Pm6 of the optional module 406 and accumulating the acquired power consumption value Pm6. The optional modules 405, 406 consume a constant amount of power for each sheet S. Therefore, the accumulated power consumption amounts Wm5, and Wm6 may be acquired from the memory 701 as a fixed value. The summing unit 720 sums the accumulated power consumption amount Wm1 to Wm6 acquired for the respective module, and acquires the accumulated power consumption amount WA. The display control unit 730 displays the accumulated power consumption amount WA on the touch panel 42 in accordance with an instruction input through the operation unit 41.

Note that more optional devices may be connected to the image forming apparatus 10. In this case, the individual acquiring unit 710 may recognize the optional device as the i-th function module and acquire the accumulated power consumption amount Wmi.

A communication circuit 702 is a communication circuit (e.g., a wireless LAN circuit or a wired LAN circuit) used to receive print job information from an externally provided host computer. The communication circuit 702 may transmit display data (e.g., HTML data) for displaying the accumulated power consumption amount WA to the host computer and display the accumulated power consumption amount WA on the display of the host computer.

3-3. Calculation method for fixing module

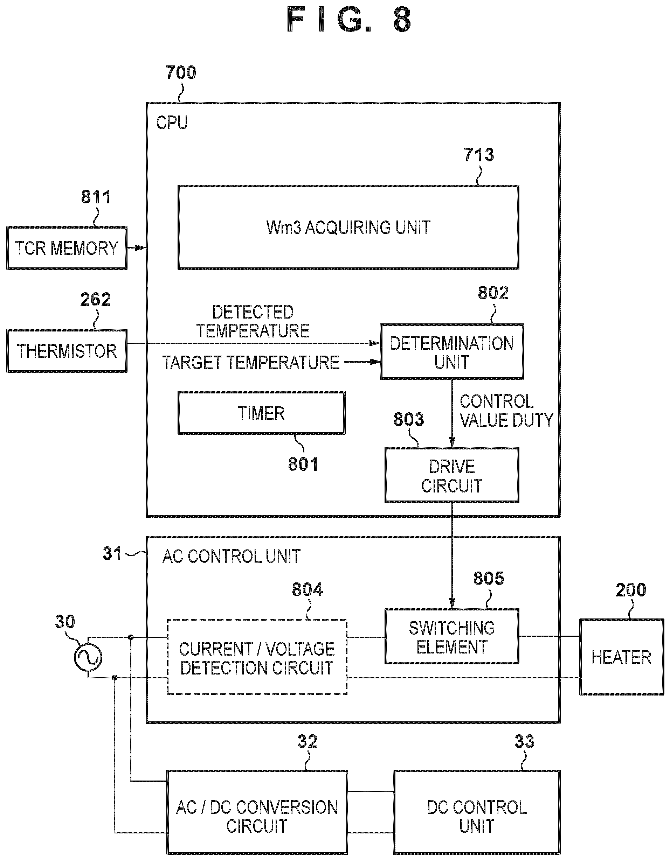

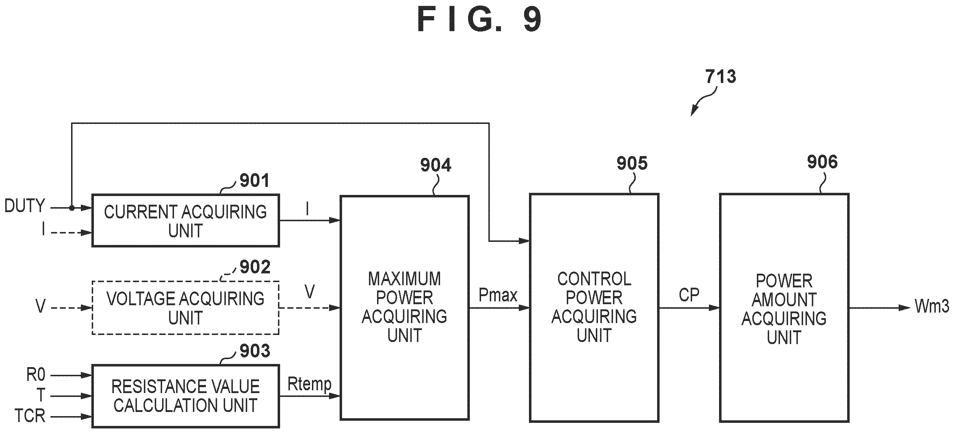

FIG. 8 is a diagram for explaining functions involved in a method for acquiring the accumulated power consumption amount Wm3 for the fixing module 403. FIG. 9 illustrates a detailed view of Wm3 acquiring unit 713. A determination unit 802 manages a measurement period of the temperature T of the heater 200 using a timer 801. The measurement period and the control period of the heater 200 basically coincide with each other. A determination unit 802 acquires the detected temperature T from the thermistor 262 for each control period. The determination unit 802 determines a control value DUTY so that the detected temperature T approaches the target temperature Ttg, and sets the control value in a drive circuit 803. The drive circuit 803 adjusts the power supplied to the heater 200 by turning on/off a switching elements 805. Here, the control value may indicate a ratio (on-duty ratio) of the time for which the switching elements 805 is supplied in one period of the alternating current supplied from the external power source 30.

A current acquiring unit 901 of Wm3 acquiring unit 713 acquires a current value I (effective value) when the control value DUTY is 100%. This value may be stored in the memory 701 in advance or may be detected by a current/voltage detection circuit 804. Alternatively, the current acquiring unit 901 may acquire the current value I based on the temperature T detected by the thermistor 262. The current/voltage detection circuit 804 is a current detection circuit that detects a current supplied from the external power source 30 or a voltage detection circuit that detects an AC voltage. The current/voltage detection circuit 804 need not detect both current and voltage. By using the current/voltage detection circuit 804 or the thermistor 262, more accurate information corresponding to the state at that time can be obtained.

A maximum power acquiring unit 904 of Wm3 acquiring unit 713 acquires the supplied power value (maximum power value Pmax) based on the current value I acquired by the current acquiring unit 901.

$$Pmax = I^2 \times Rtemp \quad \cdot\cdot\cdot Eq.1$$

Here, Rtemp is the temperature-dependent resistance of the heater 200. Note that a voltage acquiring unit 902 may acquire the AC voltage V (effective value) associated with the control value of 100% from the memory 701 or acquire the AC voltage V by the current/voltage detection circuit 804. Here, the maximum power Pmax is computed from the following equation.

$$Pmax = V^2 / Rtemp \quad \cdot\cdot\cdot Eq.2$$

Further, a resistance value calculation unit 903 may calculate the resistance value Rtemp from the following

equation.

$$Rtemp = R0 + (R0 \times (T\text{-}23)) \times TCR \quad \cdot \cdot \cdot Eq.3$$

Here, R0 is the resistance of the heater 200 at 23° C. TCR indicates the rate of change of the resistance with respect to the temperature. As illustrated in FIG. 8, a TCR memory 811 may be attached to the fixing device 13. In this case, the measured R0 and TCR of the fixing device 13 may be stored in a value of the TCR memory 811. For this purpose, values of R0 and TCR can be read out by the CPU 700. When the TCR memory 811 are not installed, the unique value for each individual is not used, and a general value is used instead.

A control power acquiring unit 905 of Wm3 acquiring unit 713 acquires the control power value CP (W) based on the maximum power Pmax and the control value DUTY.

$$CP = Pmax \times DUTY \quad \cdot \cdot \cdot Eq.4$$

A power amount acquiring unit 906 acquires the accumulated power consumption amount Wm3' per one control period tp (s) by the following equation.

$$Wm3' = CP \times tp \quad \cdot \cdot \cdot Eq.5$$

Further, the power amount acquiring unit 906 acquires the accumulated power consumption amount Wm3 (W·s) by accumulating Wm3' during energization of the heater 200. That is, the power amount acquiring unit 906 acquires the accumulated power consumption amount Wm3 (W·s) by adding a plurality of accumulated power consumption amount Wm3' acquired at different times.

$$Wm3 = \sum Wm3' \quad \cdots Eq.6$$

Here, although the accumulated power consumption amount Wm3 is required for the heater 200, the accumulated power consumption amount Wm3 may be individually obtained for the heating element 205 and the heating element 206, and the two obtained accumulated power consumption amount Wm3 may be summed.

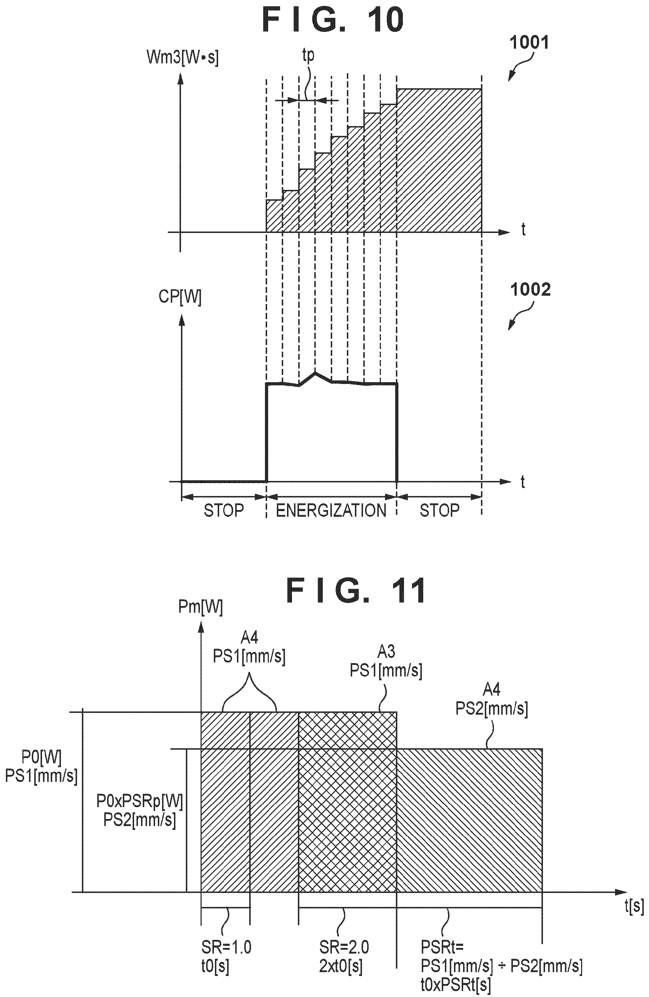

FIG. 10 illustrates a graph 1001 illustrating the transition of the accumulated power consumption amount Wm3 and a graph 1002 illustrating the transition of the control power value CP. As illustrated in FIG. 10, during the period in which the heater 200 are energized, the control power value CP is acquired and accumulated for each control period cp. As a result, the accumulated power consumption amount Wm3 for the fixing device 13 is accurately acquired without using the power amount meter.

3-4. Calculation method for main body module

FIG. 11 is a diagram for illustrating how to obtain power consumption of the main body module 404. As an example, a method of obtaining the accumulated power consumption amount WA when images are continuously formed on four sheets S will be described. The vertical axis indicates the power consumption value. The horizontal axis indicates time. The first sheet S and the second sheet S are A4 size plain paper sheets S. A process speed PS1 (mm/s) shall be applied to these. The third sheet S is a sheet S of A3 size plain paper. The process speed PS1 (mm/s) shall be applied to these. The fourth sheet S is a sheet S of A4 size thick paper. A process speed PS2 (mm/s) shall be applied to it. Here, the value of PS1 is larger than the value of PS2.

Here, as a standard mode (reference print mode), a combination of the sheet S, the color printing, and the discharge tray 15 of A4 size plain paper is defined. The color, the print color, and the discharge port are designated by the print job information. The power consumption value (reference value) per image in the standard mode is defined as P0. A size ratio SR indicates the ratio of the size of the sheet S with respect to A4 size. Thus, the size ratio SR for A4 size is 1.0. The size ratio SR of A3 size is 2.0.

The power consumption value of the other modes relative to the standard mode is calculated based on P0. For example, the power consumption value P when the process speed is PS2 is calculated from the following equation.

$$P = P0 \times PSRp \quad \cdot \cdot \cdot Eq.7$$

Here, PSRp is the power ratio (power scaling factor) of the process speed PS2 with respect to the standard mode (process speed PS1). The conveyance time of the sheets S in the standard mode are t0. Therefore, the accumulated power consumption amount WO in the standard mode can be calculated from the following equation.

$$W0 = P0 \times t0 \quad \cdot \cdot \cdot Eq.8$$

$$t0 = 60/ppm \quad \cdot \cdot \cdot Eq.9$$

Here, ppm indicates the number of sheets S that can be printed per minute in the standard mode. The process speed of A3 size sheet S is PS 1 and the power consumption value is P0. Therefore, the accumulated power consumption amount W for A3 size sheet S can be calculated from the following equation.

$$W = W0 \times SR \quad \cdot \cdot \cdot Eq.10$$

Here, the time scaling factor SR of A3 size is 2.0.

As illustrated in FIG. 11, the fourth sheet S is an A4 size sheet S, but PS2 is applied to it as the process speed. Therefore, the conveyance time t of the fourth sheet S can be calculated from the following equation.

$$t = t0 \times SR \times PSRt \quad \cdot \cdot \cdot Eq.11$$

Here, since A4 size is a standard size, the time scaling factor SR is 1.0. PSRt indicates a scaling factor of the power consumption amount (conveyance time) along the time axis direction (time scaling factor).

$$PSRt = PS1/PS2 \quad \cdot \cdot \cdot Eq.12$$

Therefore, the accumulated power consumption amount W for the fourth sheet S can be calculated from the following equation.

$$W = P0 \times PSRp \times t0 \times SR \times PSRt \quad \cdot \cdot \cdot Eq.13$$

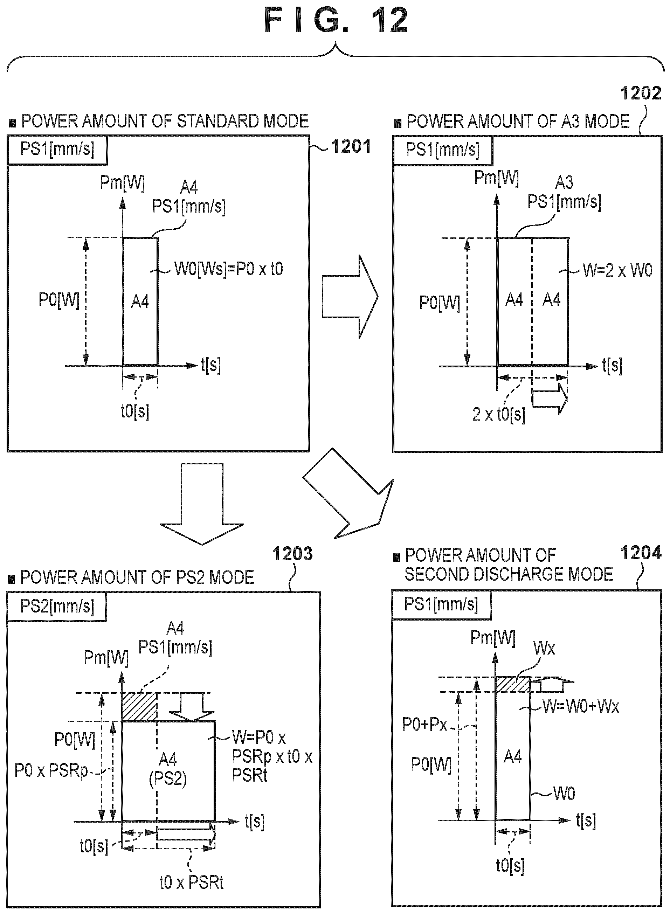

FIG. 12 illustrates a method of obtaining the accumulated power consumption amount for each mode. A frame 1201 indicates a method of obtaining the accumulated power consumption amount WO in the standard mode. As described above, the accumulated power consumption amount WO is a product of the power consumption value P0 and the conveyance time t0. A frame 1202 indicates a method of obtaining the accumulated power consumption amount W in A3 mode. The accumulated power consumption amount W in A3 mode is twice the accumulated power consumption amount WO in the standard mode. A frame 1203 indicates a method of obtaining the accumulated power consumption amount W in PS2 mode. When the process speed PS decreases, the power consumption value P of the motor M1 or the like decreases. When the process speed PS decreases, the conveyance time t becomes longer.

A frame 1204 indicates how to obtain the accumulated power consumption amount W in the second discharge mode in which the sheet S is discharged to the discharge tray 17. In the second discharge mode, the discharge roller 16 and the conveyance roller 9e need to be driven. Therefore, the power consumption value P increases by Px compared to P0. Here, it is assumed that the conveyance time for discharging the sheet S to the discharge tray 17 is equal to the conveyance time t0 for discharging the sheet S to the discharge tray 15. Therefore, the accumulated power consumption amount W for the second discharge mode can be calculated from the following equations.

$$W = W0 + Wx \quad \cdot \cdot \cdot Eq.14$$

$$Wx = Px \times t0 \quad \cdot \cdot \cdot Eq.15$$

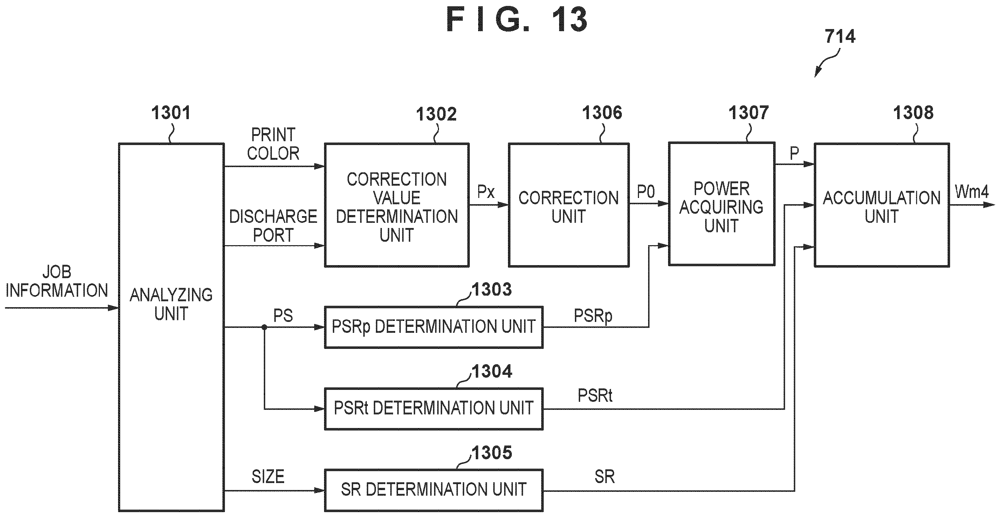

FIG. 13 illustrates a detailed view of Wm4 acquiring unit 714. An analyzing unit 1301 analyzes the print job information accepted by the operation unit 41 or received by the communication circuit 702, and acquires the print color (color/monochrome), the basis weight (e.g., g/m^2, thin paper, plain paper, and thick paper), the discharge port, the process speed PS, the size of the sheet S, and the like. Note that the analyzing unit 1301 may specify the process speed PS from the basis weight. The memory 701 may store tables or databases that hold the process speed PS in association with the basis weight. The analyzing unit 703 may obtain the process speed PS associated with the basis weight by referring to the table or the like. As described above, the analyzing unit 1301 may include a specifying unit for specifying the process speed PS.

A correction value determination unit 1302 determines a correction value Px for the power consumption value P0 in the standard mode according to at least one of the print color and the discharge port. For example, when monochrome printing is designated by the print job information, the correction value Px is determined to be -P1 (e.g.,-45 (W)). When the discharge port designated by the print job information is the discharge tray 17, the corrected value Px is determined to be +P2 (e.g., +11 (W)).

The correction unit 1306 corrects the power consumption value P0 by adding the correction value Px to the power consumption value P0 for the standard mode. The power consumption value P0 is input to a power acquiring unit 1307.

PSRp determination unit 1303 determines the power scaling factor PSRp based on the process speed PS designated by the print job information. If the process speed PS is PS1, PSRp is determined to be 1.0. If the process speed PS is PS2, PSRp is determined based on PS1 and PS2. A table, equation, program function or program module for determining PSRp may be stored in the memory 701.

PSRt determination unit 1304 determines the time scaling factor PSRt based on the process speed PS designated by the print job information. The time scaling factor PSRt may be computed using the equation Eq.12.

SR determination unit 1305 determines the time scaling factor SR based on the size of the sheet S designated by the print job information. Here, the time scaling factor SR of A4 size is 1.0. Here, the time scaling factor SR of A3 size is 2.0.

The power acquiring unit 1307 calculates an accumulated power consumption amount Wm4 for forming an image on one sheet S based on the power consumption value P0, the power scaling factor PSRp, and the time scaling factor PSRt, and SR.

$$Wm4 = (P0+Px) \times PSRp \ \times \ t0 \times SR \times PSRt \quad \cdot \cdot \cdot Eq.16$$

5. Flowchart

5-1. Method for obtaining power consumption of fixing device

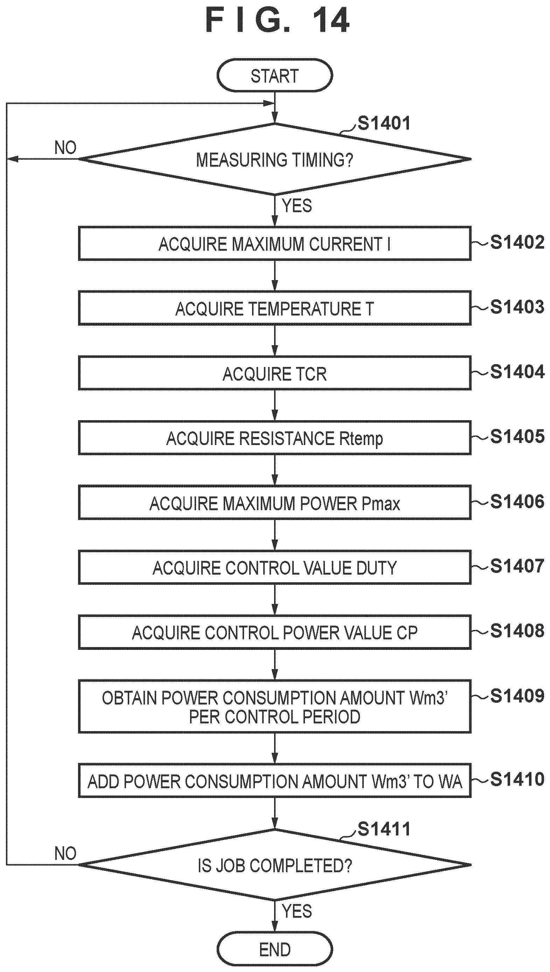

FIG. 14 illustrates a control method performed by the CPU 700 according to the control program. When the image forming system 100 transitions from the sleep state to the active state, the CPU 700 performs the following process.

In the step S1401, the CPU 700 refers to the timer 801 and determines whether or not the measurement timing has arrived. As described above, the measurement timing arrives at each control period tp. When the measurement timing arrives, the CPU 700 advances the process from the step S1401 to the step S 1402.

In the step S1402, the CPU 700 (current acquiring unit 901) acquires the maximum current I. The maximum current I may be determined from the control value DUTY or may be detected by the current/voltage detection circuit 804. The maximum voltage V may be obtained instead of the maximum current I.

In the step S1403, the CPU 700 (resistance value calculation unit 903) acquires the temperature T by using the thermistor 262.

In the step S1404, the CPU 700 (resistance value calculation unit 903) acquires the rate of change TCR from the TCR memory 811.

In the step S1405, the CPU 700 (resistance value calculation unit 903) acquires the resistance value Rtemp based on the initial resistance value R0, the temperature T, and the rate of change TCR.

In the step S1406, the CPU 700 (maximum power acquiring unit 904) acquires the maximum power value Pmax based on the maximum current I (or the maximum voltage V) and the resistance value Rtemp.

In the step S1407, the CPU 700 (control power acquiring unit 905) acquires the control value DUTY is being applied to the fixing device 13 at that time.

In the step S1408, the CPU 700 (control power acquiring unit 905) acquires the control power value CP (W) based on the maximum power value Pmax and the control value DUTY.

In the step S1409, the CPU 700 (power amount acquiring unit 906) obtains an accumulated power consumption amount Wm3' per control period tp based on the control period tp and the control power value CP.

In the step S1410, the CPU 700 (summing unit 720) adds the accumulated power consumption amount Wm3' to the accumulated power consumption amount WA of the entire of the image forming system 100.

At the step S1411, the CPU 700 determines whether the print job has ended based on the job information. If the print job has not ended, the CPU 700 advances the process from the step S1411 to the step S1401 and waits for the next measuring timing arrival. Upon completion of the print job, the CPU 700 transitions the image forming system 100 from the active state to the standby state.

5-2. Method for obtaining power consumption of main body

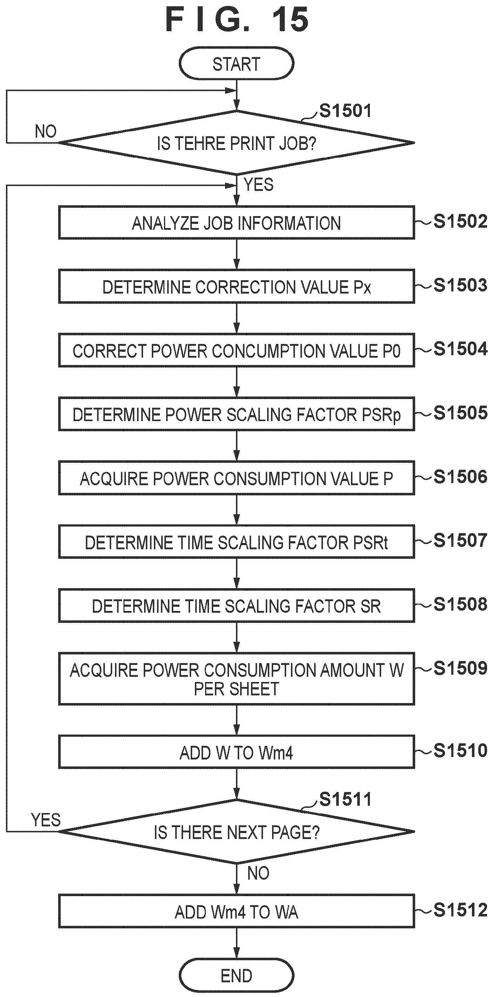

FIG. 15 illustrates a control method performed by the CPU 700 according to the control program. Here, it is assumed that the image forming system 100 is in the sleep state or the standby state.

In the step S1501, the CPU 700 (analyzing unit 1301) determines whether a print job has been input by the user. When the print job is input, the CPU 700 advances the process from the step S1501 to the step S1502.

In the step S1502, the CPU 700 (analyzing unit 1301) analyzes print job information. As a result, the print color, the size of the sheet S, the basis weight, the process speed PS, and the like can be obtained. The process speed PS may be determined from the basis weight.

In the step S1503, the CPU 700 (correction value determination unit 1302) determines the correction value Px based on the print color, the discharge port, and the like. Here, the correction value Px is a correction value of the power consumption value P0 for the standard mode. The power consumption value P0 may be referred to as a reference power or an initial power.

In the step S1504, the CPU 700 (correction unit 1306) corrects the power consumption value P0 in the standard mode based on the correction value Px.

In the step S1505, the CPU 700 (PSRp determination unit 1303 determines the power scaling factor PSRp based on the process speed PS.

In the step S1506, the CPU 700 (power acquiring unit 1307) acquires the power consumption value P based on the corrected power consumption value P0 and the power scaling factor PSRp.

In the step S1507, the CPU 700 (PSRt determination unit 1304 determines the time scaling factor PSRt based on the process speed PS.

In the step S1508, the CPU 700 (SR determination unit 1305 determines the time scaling factor SR based on the size of the sheet S.

In the step S1509, the CPU 700 (accumulation unit 1308) acquires the accumulated power consumption amount W per one image based on the power consumption value P and the time scaling factor PSRt, and SR.

In the step S1510, the CPU 700 (accumulation unit 1308) accumulates the accumulated power consumption amount W into the accumulated power consumption amount Wm4 per print job.

At the step S1511, the CPU 700 determines whether a next page remains based on the print job information. If there is a next page, the CPU 700 advances the process from the step S1511 to the step S1502 and analyzes the print job information for the next page. The CPU 700 then executes the step S1511 from the step S1502. When a next page does not remain, the CPU 700 advances the process from the step S1511 to the step S1512.

In the step S1512, the CPU 700 (summing unit 720) adds the accumulated power consumption amount Wm4 per job to the entire accumulated power consumption amount WA.

6. Supplement

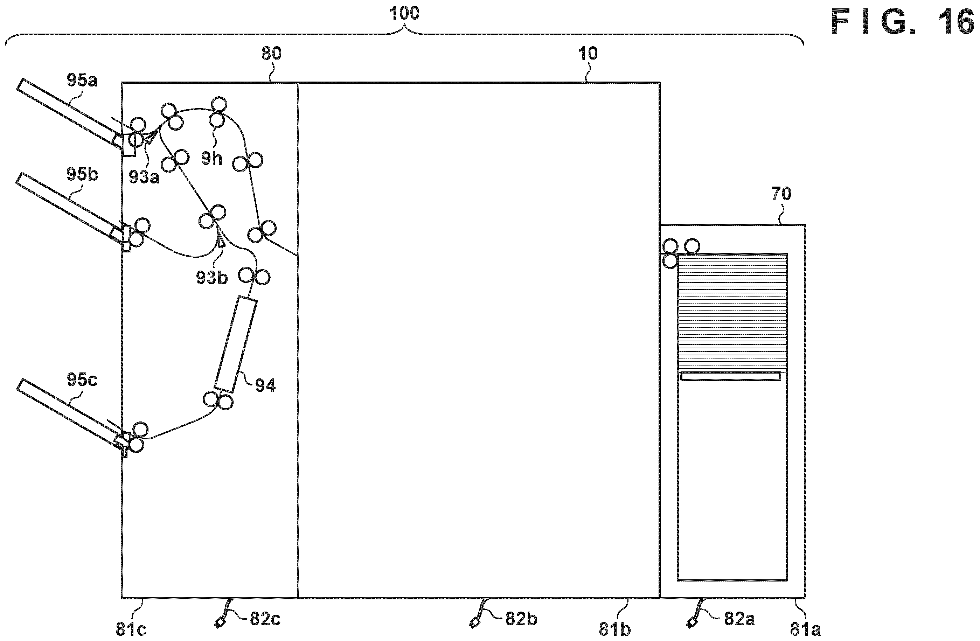

FIG. 16 illustrates an example of the image forming system 100 with a plurality of optional devices. The optional feeding device 70 is a large-capacity feeding device capable of accommodating a large number of sheets S. The feeding device 70 can feed the sheet S to the image forming apparatus 10. The feeding device 70 accommodates the sheet S inside the housing 81a. The feeding device 70 may have a power cable 82a connectable to an external power source.

The image forming apparatus 10 may include a housing 81b and a power cable 82b. The various components accommodated in the housing 81b have already been described in FIG. 1 and are therefore omitted here. The power cable 82b is a power cable for connecting the external power source 30 and the AC control unit 31.

The post-processing apparatus 80 has a housing 81c, and performs post-processing on the sheet S discharged from the image forming apparatus 10. The conveyance roller 9h conveys the sheet S delivered from the image forming apparatus 10. The guide members 93a, and 93b are flappers for switching the conveyance destination of the sheet S. The guide member 93a can guide the sheet S to the tray 95a. The guide member 93a and the guide member 93b can guide the sheet S to the tray 95b. Further, the guide member 93a and the guide member 93b can guide the sheet S to a post-processing mechanism 94. The post-processing mechanism 94 bundles the plurality of sheets S to form a sheet bundle, staples the sheet bundle, or punches on the sheet S. The sheet S or the sheet bundle subjected to the post-processing is discharged to the tray 95c.

The post-processing apparatus 80 receives electric power from the external power source 30 via the power cable 82c. In this example, the power cable 82a to 82c are each independent, but this is only an example. Power may be supplied to the image forming apparatus 10, the feeding device 70, and the post-processing apparatus 80 from one power cable 82b. Alternatively, power may be supplied to the image forming apparatus 10 and the feeding device 70 by the power cable 82b, and power may be supplied to the post-processing apparatus 80 by the power cable 82c.

As described above, the accumulated power consumption amount Wm for the image forming apparatus 10, the feeding device 70, and the post-processing apparatus 80 as different modules may be calculated. Alternatively, a module for determining the accumulated power consumption amount Wm may be considered for each power cable 82a to 82c. As described above, there may be a plurality of modules inside the image forming apparatus 10.

The fixing module 403 is an example of a first function module for fixing a toner image to a sheet S. The main body module 404 is an example of a second function module used to form a toner image on a sheet S. The control power value CP is an example of a power consumption value of the first function module. The power consumption value P of the main body module 404 is an example of a power consumption value of the second function module. The CPU 700 and the power amount acquiring unit 906 may acquire the accumulated power consumption amount Wm3 of the first function module by accumulating the power consumption value Pm of the first function module in the time axis direction. The CPU 700 and the accumulation unit 1308 may acquire the accumulated power consumption amount Wm4 of the second function module by accumulating the power consumption value Pm of the second function module in the time axis direction. Accordingly, the accumulated power consumption amount in the image forming apparatus 10 can be obtained more accurately.

The CPU 700 may sum (add) the accumulated power consumption amount Wm3 of the first function module and the accumulated power consumption amount Wm4 of the second function module to obtain the accumulated power consumption amount WA of the entire of the image forming apparatus 10. Accordingly, the accumulated power consumption amount in the entire of the image forming apparatus 10 can be obtained more accurately.

The CPU 700 may obtain individual power consumption value Pm for a plurality of function modules. The CPU 700 may acquire the accumulated power consumption amount Wm of each of the plurality of function modules by accumulating individual power consumption value Pm for the plurality of function modules in the time axis direction. Further, the CPU 700 may acquire the accumulated power consumption amount WA by summing the accumulated power consumption amount Wm1 to Wm6 of each of the plurality of function modules. As described above, by obtaining the power consumption value Pm for each module, the entire of accumulated power consumption amount WA can be obtained more accurately.

The second function module may include a reading unit (e.g., the image reader 20) that reads a document. The second function module may include a control unit (e.g., the controller 40). The second function module may include an image forming unit (e.g., the image forming unit 50) that forms a toner image on the sheet S. The second function module may include a conveyance unit (conveyance rollers 9a to 9e, motor M1) that conveys the sheet S.

The image forming system 100 may further include a first housing and a second housing each having a power cable. The first function module and the second function module may be disposed in the first housing (image forming apparatus 10). A third function module of the plurality of function modules (e.g., optional module 405, 406) may be disposed in the second housing. The CPU 700 may acquire the power consumption value Pm for the third function module, accumulate the power consumption value Pm in the time axis direction, and obtain the accumulated power consumption amounts Wm5, and Wm6.

The third function module may include an optional device (e.g., cassette pedestal) connected to the main body of the image forming apparatus 10.

As illustrated in FIG. 4, the optional device may include at least one of a post-processing apparatus 80 that performs post-processing on the sheet S discharged from the image forming apparatus 10, and the feeding device 70 that feeds the sheet S to the image forming apparatus 10.

The first function module may include a first heater (e.g., heating element 205) and a second heater (heating element 206). In this case, the CPU 700 may acquire the power consumption value of the first heater and the power consumption value of the second heater, respectively. Further, the CPU 700 may calculate the accumulated power consumption amount by accumulating the power consumption value of the first heater in the time axis direction. Further, the CPU 700 may calculate the accumulated power consumption amount by accumulating the power consumption value of the second heater in the time axis direction.

The CPU 700 may acquire the power consumption value Pm for the first function module and the second function module using calculation methods that differ from each other. Further, the CPU 700 may acquire the accumulated power consumption amount Wm for the first function module and the second function module using calculation methods that differ from each other.

The CPU 700 may acquire the accumulated power consumption amount Wm1 for the reading unit as a fixed value. The CPU 700 may acquire the accumulated power consumption amount Wm2 for the control unit as a fixed value. The CPU 700 and power amount acquiring unit 906 may accumulate the power consumption value Pm (control power value CP) acquired for each control period of the first function module.

The thermistor 262 is an example of a temperature detection unit that detects the temperature T of the heating element of the first function module. The CPU 700 and the determination unit 802 may determine a control value DUTY for controlling the temperature T detected by the temperature detection unit to the target temperature Ttg. The drive circuit 803 and the switching elements 805 may function as an adjusting unit that adjusts the electric power supplied to the heating element according to the control value DUTY. The CPU 700 may acquire the power consumption value Pm (control power value CP) of the first function module based on the control value DUTY.

The current/voltage detection circuit 804 is an example of a current detection unit that detects a current supplied to the heating element of the first function module. The CPU 700 may acquire the power consumption value Pm (control power value CP) of the first function module based on the current I detected by the current detection unit. The current/voltage detection circuit 804 is an example of a voltage detection unit that detects a voltage V supplied to the heating element of the first function module. The CPU 700 may acquire the power consumption value Pm (control power value CP) of the first function module based on the voltage V detected by the voltage detection unit. In this way, the power consumption value Pm may be obtained inexpensively without using a power sensor.

The touch panel 42 is an example of a display unit that displays at least one of the accumulated power consumption amount Wm3 of the first function module and the accumulated power consumption amount Wm4 of the second function module. The touch panel 42 may display the accumulated power consumption amount (e.g., the accumulated power consumption amount WA of the image forming apparatus 10) based on the accumulated power consumption amount Wm3 of the first function module and the accumulated power consumption amount Wm4 of the second function module. Accordingly, the user can visually confirm the accumulated power consumption amount. As a result, the user will be able to take an action such that the accumulated power consumption amount is more reduced.

The CPU 700 and the control power acquiring unit 905 acquire the power consumption value (e.g., the control power value CP) based on the detected temperature T, the control value DUTY, the current I supplied to the heating element, or the voltage V applied to the heating element. Here, the power consumption value (e.g., the control power value CP) is the power consumption value of the fixing module 403 during the time when the heating element generates heat. The CPU 700 and the power amount acquiring unit 906 may acquire the accumulated power consumption amount Wm3 of the fixing module 403 by accumulating a plurality of power consumption values acquired at a plurality of times. Accordingly, the accumulated power consumption amount Wm3 of the image forming apparatus 10 (fixing module 403) can be acquired more accurately.

The CPU 700 may acquire the control value DUTY at predetermined period (e.g., the control period tp), and acquire the power consumption value (the control power value CP) based on the supplied power value (e.g., Pmax) and the control value DUTY supplied from the external power source 30 to the heating element. The CPU 700 acquires the accumulated power consumption amount Wm3 of the fixing module 403 by accumulating the power consumption values over a time period during which the heating element is generating heat. In this way, by acquiring the control value DUTY at a constant period, the power consumption value can be accumulated at a constant period.

The control value DUTY may be a ratio of the power consumption value (e.g., the control power value CP) to the supplied power value (e.g., the power value Pmax). In particular, the control value DUTY is required for temperature adjustment of the heater 200. Therefore, by diverting parameters necessary for the temperature adjustment, the power consumption value can be obtained by a simpler method.

The CPU 700 may acquire a current (e.g., a current I) supplied to the heating element based on the control value, and calculate a supplied power value based on the current and a resistance value (e.g., a resistance value R0) of the heating element. The CPU 700 may acquire a current supplied to the heating element based on the temperature T, and calculate a supplied power value based on the current and the resistance value of the heating element. The CPU 700 may obtain the supplied power value based on the resistance value of the heating element and the current detected by the current detection unit (e.g., the current/voltage detection circuit 804). The CPU 700 may obtain the supplied power value based on the resistance value of the heating element and the voltage detected by the voltage detection unit (e.g., the current/voltage detection circuit 804). The memory 701 is an example of a storage unit that stores the resistance value R0 of the heating element. The resistance value calculation unit 903 may function as a correction unit that corrects the resistance value of the heating element based on the detected temperature T and the increase rate (e.g., TCR) of the resistance value with respect to the temperature increase of the heating element.

The CPU 700 may acquire a power consumption value for a function module (e.g., the main body module 404) different from the fixing module 403 among the plurality of function modules constituting the image forming apparatus 10. The CPU 700 may obtain the accumulated power consumption amount of another function module by accumulating the power consumption value of the other function module.

The CPU 700 and the summing unit 720 may obtain the accumulated power consumption amount WA for the entire of the image forming apparatus 10 by sums the accumulated power consumption amount Wm3 of the fixing module 403 and the accumulated power consumption amount Wm1, Wm2, Wm4 to Wm6 for the another function modules.

The touch panel 42 is an example of a display unit that displays an accumulated power consumption amount Wm3 of the fixing module 403 or an accumulated power consumption amount WA based thereon.

The CPU 700, the operation unit 41, and the communication circuit 702 function as an accepting unit that accepts print job information for forming an image on the sheet S. The image forming unit 50 may form an image on the sheet S in accordance with the print mode designated by the print job information among the plurality of print modes. The CPU 700 acquires the power consumption value P consumed to form an image in units of an operation of forming one image on the sheet S. The CPU 700 acquires a reference value (e.g., P0) of power consumed for forming an image on the sheet S in a reference print mode as a reference in a plurality of print modes, and a scaling factor (e.g., power scaling factor PSRp) corresponding to the print job information. The CPU 700 may acquire, based on the reference value and the scaling factor, the power consumption value P consumed to form an image on the sheet S in accordance with the print mode designated by the print job information. The CPU 700 may acquire a power consumption value which indicates a power estimated to be consumed in forming an image in units of an operation of forming one image on the sheet. The CPU 700 may acquire power consumption values corresponding to the plurality of print modes respectively designated by the print job information, based on a reference value which indicates a power estimated to be consumed in forming the image in a reference print mode which is selected from the plurality of print modes as a reference and a scaling factor corresponding to the print job information. Accordingly, the power consumption value in the image forming apparatus 10 can be obtained more accurately.

The CPU 700 and the accumulation unit 1308 may acquire the accumulated power consumption amount Wm4 by accumulating the plurality of acquired power consumption values P. Accordingly, the accumulated power consumption amount Wm4 in the image forming apparatus 10 can be obtained more accurately.

The CPU 700 may determine the power scaling factor PSRp according to the print job information and multiply the reference value by the power scaling factor PSRp to acquire the power consumption value P. The power scaling factor PSRp may be determined according to the basis weight designated by the print job information. The power scaling factor may be determined in accordance with a conveyance speed (process speed PS) of the sheet S specified from the print job information.

The CPU 700 may determine the time scaling factors SR and PSRt according to the print job information and multiply the power consumption value by the time scaling factors SR, and PSRt to acquire the accumulated power consumption amount Wm4. The time scaling factor SR may be determined according to the size of the sheet S designated by the print job information. The time scaling factor PSRt may be determined according to the basis weight designated by the print job information. The time scaling factor PSRt may be determined according to the conveyance speed of the sheet S specified by the print job information. Each of these parameters is a parameter that affects the conveyance time of the sheet S.

The conveyance path 18 is an example of a first discharge path for discharging the sheet S on which an image is formed in accordance with the reference print mode. The conveyance path 19 is an example of a second discharge path for discharging the sheet S on which an image is formed in accordance with another print mode (e.g., a second discharge mode) different from the reference print mode. When another print mode is designated by the print job information, the CPU 700 and the correction unit 1306 may correct the reference value by adding the correction value (e.g., Px) associated with the second discharge path to the reference value.

The image forming unit 50 may execute full color printing in accordance with the reference print mode, and may execute monochrome printing in accordance with another print mode different from the reference print mode. When another print mode is designated by the print job information, image forming apparatus 10 may correct the reference value by subtracting the correction value (e.g., 45W) associated with the monochrome print from the reference value.

The CPU 700 may obtain the power consumption value for the fixing module 403 independently of the power consumption value of the main body module 404. The CPU 700 may accumulate the power consumption value for the fixing module 403 to acquire the accumulated power consumption amount Wm3 of the fixing module 403.

The CPU 700 may obtain the power consumption value for the fixing module 403 based on the detected temperature T, the control value DUTY, the current I supplied to the heating element, or the voltage V applied to the heating element. The CPU 700 may acquire the accumulated power consumption amount Wm3 by accumulating the power consumption value of the fixing module 403 over a time period during which the heating element is generating heat.

The touch panel 42 may display at least one of the accumulated power consumption amount Wm4 of the main body module 404 and the accumulated power consumption amount WA of the entire image forming apparatus 10.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An image forming apparatus (100) comprising:

   a plurality of function modules (401; 402; 403; 404; 405; 406) including a first function module configured to fix a toner image to a sheet and a second function module used for forming the toner image on the sheet; and
   first acquiring means (700; 710) for acquiring a power consumption value of the first function module and a power consumption value of the second function module, respectively;
   second acquiring means (720) for acquiring an accumulated power consumption amount of the first function module by accumulating power consumption values of the first function module in a time axis direction and acquiring an accumulated power consumption amount of the second function module by accumulating power consumption values of the second function module in the time axis direction.

2. The image forming apparatus according to Claim 1, wherein
   the second acquiring means sums the accumulated power consumption amount of the first function module and the accumulated power consumption amount of the second function module.

3. The image forming apparatus according to Claim 1, wherein

   the first acquiring means acquired individual power consumption values for the plurality of function modules;
   the second acquiring means accumulates the individual power consumption values for the plurality of function modules in the time axis direction to acquire an accumulated power consumption amount of each of the plurality of function modules, and acquires an accumulated power consumption of the image forming apparatus by summing the accumulated power consumption amount of each of the plurality of function modules.

4. The image forming apparatus according to Claim 1, wherein
   the second function module includes at least one of:

   reading means (20) for reading a document;
   controlling means (40) including the first acquiring means and the second acquiring means;
   image forming means (10) for forming the toner image on the sheet; or
   conveying means (70) for conveying the sheet.

5. The image forming apparatus according to Claim 1, further comprising:

   a first housing (81b) and a second housing (81a; 81c) each having a power cable,
   wherein the first function module and the second function module are arranged in the first housing,
   a third function module (405; 406) in the plurality of function modules are arranged in the second housing,
   the first acquiring means acquires a power consumption value of the third function module;
   the second acquiring means acquires an accumulated power consumption amount of the third function module by accumulating power consumption values of the third function module in the time axis direction.

6. The image forming apparatus according to Claim 5, wherein
   the third function module includes an optional device connected to a main body of the image forming apparatus.

7. The image forming apparatus according to Claim 6, wherein
   the optional device includes at least one of:

   a post-processing apparatus (80) configured to perform post-processing on the sheet discharged from the image forming apparatus; or
   a feeding device (70) configured to feed the sheet to the image forming apparatus.

8. The image forming apparatus according to Claim 1, wherein

the first function module includes a first heater and a second heater, and
the first acquiring means acquires a power consumption value of the first heater and a power consumption value of the second heater, respectively.

9. The image forming apparatus according to Claim 1, wherein
the first acquiring means acquires power consumption values for the first function module and the second function module using different calculation methods for each.

10. The image forming apparatus according to Claim 4, wherein
the second acquiring means acquires an accumulated power consumption amount as a fixed value for the reading means.

11. The image forming apparatus according to Claim 4, wherein
the second acquiring means acquires an accumulated power consumption amount as a fixed value for the controlling means.

12. The image forming apparatus according to Claim 1, wherein
the second acquiring means accumulates the power consumption values acquired by the first acquiring means at each control period of the first function module.

13. The image forming apparatus according to Claim 1, further comprising:

temperature detecting means (262) for detecting a temperature of a heating element of the first function module,
determining means (802) for determining a control value for controlling the temperature detected by the temperature detecting means to a target temperature; and
adjusting means (803; 805) for adjusting an electrical power supplied to the heating element in accordance with the control value;,
the first acquiring means acquires a power consumption value of the first function module based on the control value.

14. The image forming apparatus according to Claim 1, further comprising:

current detecting means (804) for detecting a current supplied to a heating element of the first function module, wherein the first acquiring means acquires a power consumption value of the first function module based on the current detected by the current detecting means.

15. The image forming apparatus according to Claim 1, further comprising:

voltage detecting means (804) for detecting a voltage applied to a heating element of the first function module, wherein the first acquiring means acquires a power consumption value of the first function module based on the voltage detected by the voltage detecting means.

16. The image forming apparatus according to Claim 1, further comprising:
displaying means (41) for displaying at least one of an accumulated power consumption amount of the first function module and an accumulated power consumption amount of the second function module, or an accumulated power consumption amount based on the accumulated power consumption amount of the first function module and the accumulated power consumption amount of the second function module.

# FIG. 1

# FIG. 2A

# FIG. 2B

# F I G. 3

301     302     303     42

| MONTHLY POWER CONSUMPTION AMOUNT | WEEKLY POWER CONSUMPTION AMOUNT | DAYLY ELECTRIC POWER CONSUMPTION AMOUNT |

Wh

DAY

01 02 03 04 05 06 07 08 09 10 11 12

EP 4 641 314 A2

# F I G. 4

READER MODULE                                              ⌇~ 401
```
┌─────────────────────────────────────┐
│           IMAGE READER        ⌇20    │  ------→ Wm1 -------
└─────────────────────────────────────┘
```

CONTROLLER MODULE                                          ⌇~ 402
```
┌─────────────────────────────────────┐
│           CONTROLLER          ⌇40    │  ------→ Wm2 -------
└─────────────────────────────────────┘
```

FIXING MODULE                                              ⌇~ 403
```
┌─────────────────────────────────────┐
│          FIXING DEVICE        ⌇13    │  ------→ Wm3 -------
└─────────────────────────────────────┘
```

MAIN BODY MODULE                                           ⌇~ 404
```
┌─────────────────────────────────────┐
│             MOTOR             ⌇M1    │
└─────────────────────────────────────┘
┌─────────────────────────────────────┐
│      CHARGING POWER SUPPLY    ⌇411   │
└─────────────────────────────────────┘
┌─────────────────────────────────────┐
│          EXPOSURE DEVICE      ⌇3     │
└─────────────────────────────────────┘
┌─────────────────────────────────────┐
│     DEVELOPING POWER SUPPLY   ⌇412   │
└─────────────────────────────────────┘
┌─────────────────────────────────────┐
│  PRIMARY TRANSFER POWER SUPPLY ⌇413  │  ------→ Wm4 -------
└─────────────────────────────────────┘
┌─────────────────────────────────────┐
│ SECONDARY TRANSFER POWER SUPPLY ⌇414 │
└─────────────────────────────────────┘
```

OPTION MODULE                                              ⌇~ 405
```
┌─────────────────────────────────────┐
│         FEEDING DEVICE        ⌇70    │  ------→ Wm5 -------
└─────────────────────────────────────┘
```

OPTION MODULE                                              ⌇~ 406
```
┌─────────────────────────────────────┐
│    POST-PROCESSING APPARATUS  ⌇80    │  ------→ Wm6 -------
└─────────────────────────────────────┘
```

⌇→ WA

FIG. 5

EP 4 641 314 A2

# F I G. 6

POWER CONSUMPTION VALUE [W]

FIXING DEVICE

W-UP

PRINT(FIXING)

RD

SLEEP

PRINT

STAND-BY

TIME [s]

SLEEP STATE

PRINT STATE

STANDBY STATE

SLEEP STATE

EP 4 641 314 A2

EP 4 641 314 A2

700 CPU

710

INDIVIDUAL ACQUIRING UNIT

711
Wm1 ACQUIRING UNIT

712
Wm2 ACQUIRING UNIT

713
Wm3 ACQUIRING UNIT

714
Wm4 ACQUIRING UNIT

715
Wm5 ACQUIRING UNIT

716
Wm6 ACQUIRING UNIT

720
SUMMING UNIT

730
DISPLAY CONTROL UNIT

40

41
OPERATION UNIT

702
COMMUNICATION CIRCUIT

701 MEMORY

# F I G. 8

EP 4 641 314 A2

# F I G. 9

713

DUTY →
I ----→ **901** CURRENT ACQUIRING UNIT → I →

V ----→ **902** VOLTAGE ACQUIRING UNIT ----→ V ----→

R0 →
T →
TCR → **903** RESISTANCE VALUE CALCULATION UNIT → Rtemp →

**904** MAXIMUM POWER ACQUIRING UNIT → Pmax →

**905** CONTROL POWER ACQUIRING UNIT → CP →

**906** POWER AMOUNT ACQUIRING UNIT → Wm3

# FIG. 10

# FIG. 11

# F I G. 12

■ POWER AMOUNT OF STANDARD MODE    1201

PS1[mm/s]

Pm[W]    A4
         PS1[mm/s]

P0[W]    A4    W0[Ws]=P0 x t0

t[s]

t0[s]

■ POWER AMOUNT OF A3 MODE    1202

PS1[mm/s]

Pm[W]    A3
         PS1[mm/s]

P0[W]    A4  A4    W=2 x W0

t[s]

2 x t0[s]

■ POWER AMOUNT OF PS2 MODE    1203

PS2[mm/s]

         A4
         PS1[mm/s]
Pm[W]

P0[W]
P0 x PSRp    A4    W=P0 x
             (PS2)    PSRp x t0 x
                      PSRt

t[s]

t0[s]

t0 x PSRt

■ POWER AMOUNT OF
SECOND DISCHARGE MODE    1204

PS1[mm/s]

         Pm[W]    Wx

P0+Px    A4    W=W0+Wx

P0[W]    A4

               W0

t[s]

t0[s]

# F I G. 13

EP 4 641 314 A2

# FIG. 14

START

S1401
MEASURING TIMING? — NO

YES

ACQUIRE MAXIMUM CURRENT I — S1402

ACQUIRE TEMPERATURE T — S1403

ACQUIRE TCR — S1404

ACQUIRE RESISTANCE Rtemp — S1405

ACQUIRE MAXIMUM POWER Pmax — S1406

ACQUIRE CONTROL VALUE DUTY — S1407

ACQUIRE CONTROL POWER VALUE CP — S1408

OBTAIN POWER CONSUMPTION AMOUNT Wm3'
PER CONTROL PERIOD — S1409

ADD POWER CONSUMPTION AMOUNT Wm3' TO WA — S1410

S1411
NO — IS JOB COMPLETED?

YES

END

# F I G. 15

```
         ( START )
            │
            ▼
NO       ◇ S1501
◄────────  IS TEHRE PRINT JOB? ◇
            │ YES
            ▼
┌──────────────────────────────┐
│   ANALYZE JOB INFORMATION     │ ~S1502
└──────────────────────────────┘
            │
            ▼
┌──────────────────────────────┐
│ DETERMINE CORRECTION VALUE Px │ ~S1503
└──────────────────────────────┘
            │
            ▼
┌──────────────────────────────┐
│ CORRECT POWER CONCUMPTION VALUE P0 │ ~S1504
└──────────────────────────────┘
            │
            ▼
┌──────────────────────────────┐
│ DETERMINE POWER SCALING FACTOR PSRp │ ~S1505
└──────────────────────────────┘
            │
            ▼
┌──────────────────────────────┐
│ ACQUIRE POWER CONSUMPTION VALUE P │ ~S1506
└──────────────────────────────┘
            │
            ▼
┌──────────────────────────────┐
│ DETERMINE TIME SCALING FACTOR PSRt │ ~S1507
└──────────────────────────────┘
            │
            ▼
┌──────────────────────────────┐
│ DETERMINE TIME SCALING FACTOR SR │ ~S1508
└──────────────────────────────┘
            │
            ▼
┌──────────────────────────────┐
│ ACQUIRE POWER CONSUMPTION AMOUNT W │ ~S1509
│          PER SHEET            │
└──────────────────────────────┘
            │
            ▼
┌──────────────────────────────┐
│         ADD W TO Wm4          │ ~S1510
└──────────────────────────────┘
            │
            ▼
YES      ◇ S1511
◄────────  IS THERE NEXT PAGE? ◇
            │ NO
            ▼
┌──────────────────────────────┐
│        ADD Wm4 TO WA          │ ~S1512
└──────────────────────────────┘
            │
            ▼
          ( END )
```

# FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010120205 A